# EUROPEAN PATENT APPLICATION

(11) **EP 4 620 279 A1**
(43) Date of publication of application: **24.09.2025**
(21) Application number: 25165254.1
(22) Date of filing: 21.03.2025
(51) Int. Cl.: A01B 69/04, A01D 41/12, A01D 41/127, A01D 43/073, A01D 43/08

(54) **GRAIN CART ORCHESTRATION**

(30) Priority: 22.03.2024 US 202418614013
(71) Applicant: Raven Industries, Inc., Sioux Falls, SD 57117-5107 (US)
(72) Inventor: KOCER, Jared Ernest, Sioux Falls, South Dakota, 57110 (US); WAGERS, Jesse Lee, Harrisburg, South Dakota, 57032 (US)
(74) Representative: Pfenning, Meinig & Partner mbB

(57) **Abstract**

A system and methods for filling a plurality of grain carts with a grain spout off of a harvester. In an example, the method includes directing a first grain cart to follow the harvester at an offloading position with respect to the harvester. In another example, the method includes directing a second grain cart to follow the harvester or the first grain cart. Directing the second grain cart includes establishing a first waypoint with a position sensor of the first grain cart or the harvester. Directing the second grain cart includes establishing a second waypoint with the position sensor of the first grain cart or the harvester; In yet another example, the method includes autonomously moving the second grain cart to the first waypoint. In still yet another example, the method includes autonomously moving the second grain cart from the first waypoint to the second waypoint.

## Description

### TECHNICAL FIELD

This document pertains generally, but not by way of limitation, to a system and methods for orchestrating grain carts in an agricultural field.

### BACKGROUND

Crops are harvested with agricultural vehicles and implements, such as combines, harvesters or the like (referred to herein collectively as harvesters). The harvested crops transported using a grain cart, such as an agricultural vehicle, a tractor or truck, towing a grain cart as the agricultural implement. For example, a grain spout of a harvester is directed toward the grain cart, and the grain spout discharges grain into the grain cart. The grain cart is monitored, for instance by the operator of the tractor or combine. A replacement grain cart is dispatched to the harvester, for instance when the grain cart approaches a full configuration based on the operator observations. For example, the replacement grain cart is dispatched to the harvester using radio communication between operators of the grain carts. In an example, a human operator of a harvester calls for (and sends away) grain carts using a radio to communicate with operators of the grain carts. Accordingly, the grain cart is replaced when full.

In another example, an agricultural product is conveyed from an agricultural vehicle (e.g., a harvester) to an agricultural product storage tank. For instance, a signal is received at an empty autonomous grain cart indicating that another filled autonomous grain cart is moving to the agricultural product storage tank from a harvester for offloading. The empty autonomous grain cart is controlled based on a route to an expected future location of the harvester. For example, after receiving the signal indicating the filled autonomous grain cart is moving to the agricultural product storage tank approaches the expected future location of the harvester.

### SUMMARY

The present inventors have recognized, among other things, that a problem to be solved includes minimizing down time of one or more harvesters, and conversely increasing operating time of the one or more harvesters. In an example, one or more harvesters are located in an agricultural field, and the one or more harvesters collect crops grown in the agricultural field. The crops are transferred from the harvesters to a plurality of grain carts. The plurality of grain carts transport the crops to a storage site. The harvesters have a limited storage capacity for crops in comparison to the grain carts. For example, the harvesters stores crops in a harvester bin during replacement of grain carts to allow for continuous harvesting of the crops with the harvesters. Accordingly, the harvesters have a limited amount of time to store crops in their respective harvester bins before a grain cart is needed for offloading while continuing harvesting. In some examples, such as sugar cane harvesting, harvesters have small or non-existent harvester bins and accordingly require a steady flow of grain carts to ensure continued harvester operation.

In another example, human operators dispatch the grain carts to receive crops from one or more harvesters. The human operators, in some examples, make decisions that are less than optimal in dispatching the grain carts. For example, a first grain cart is dispatched to a first harvester instead of a second harvester having a higher priority need (e.g., its harvester bin is more full) than the first harvester. In one example, dispatching of the first grain cart to the first harvester results in the second harvester stopping its harvest operation. Accordingly, in this example, the human operator dispatch of the first grain cart to the first harvester causes down time for the second harvester.

In another example, the present inventors have recognized, that a problem to be solved includes dispatching of grain carts to follow a harvester to permit immediate offloading to a second grain cart after filling of a first grain cart. For instance, some systems estimate a future location of the harvester at a future time, and direct a grain cart to the estimated future location of the harvester. Accordingly, the grain carts are dispatched to an estimated (or anticipated) location of the harvester The in-process harvester is not able to offload crops at least until it arrives at the estimated location to meet the grain cart. Grain carts are thereby not provided in a timely fashion to ensure immediate (including near immediate) offloading from the harvester.

The present inventors have recognized, that a solution to these problems includes filling of a plurality of grain carts orchestrated by a system to minimize down time of one or more harvesters and conversely enhance the continuity of harvesting operations. For instance, a harvester transfers grain to a first grain cart of the plurality of grain carts. A fill characteristic of the first grain cart is monitored, for example to forecast a fill time of the first grain cart. The first grain cart is replaced by a second grain cart proximate to expiration (e.g., prior to, at expiration) or the like of the fill time for the first grain cart.

In another example, the grain carts follow the harvester in a queued arrangement to minimize down time of the harvester. The first grain cart is followed by a second grain cart to minimize down time of the harvester. For instance, the second grain cart is positioned to follow behind the first grain cart (e.g., immediately, in the manner to a train or convoy) to replace the first grain cart proximate to expiration of the fill time for the first grain cart.

In yet another example, availability of a subset of the plurality of harvesters is assessed, for example to identify a second grain cart of the plurality of grain carts to replace the first grain cart. The availability is assessed, in an example, by generating an availability index for each of the subset of the plurality of grain carts. In one example, the availability index is based on the fill time for the first grain cart, and one or more of a fill characteristic of the second grain cart and a transit time for the second grain cart to approach the harvester. The system dispatches the grain carts according to the availability indexes for each of the grain carts. For instance, the second grain cart is dispatched to the at least one harvester in correspondence with the availability index for the second grain cart exceeding an index threshold. In an example, the index threshold is a collection of availability indexes of the subset of the plurality of grain carts not including the second grain cart. Accordingly, the system dispatches grain carts to the at least one harvester according to the availability index for the subset of the plurality of grain carts. By selecting a grain cart with a highest availability index and associated grain cart that fits the needs of a harvester, down time for the one or more harvesters is minimized because the system orchestrates the operation of the plurality of grain carts. For example, the system minimizes down time of the one or more harvesters by dispatching the grain carts according to the availability index for the subset of the plurality of grain carts. The availability index helps prioritize the dispatching of grain carts to the harvesters to minimize down time of the harvesters.

As described herein, the system dispatches the grain carts to the one or more harvesters according to an availability index (or availability indexes) generated for the grain carts. In an example, the system generates a first availability index for the second grain cart based on the transit time for the second grain cart to approach the first harvester. In another example, the first availability index is also based on the fill characteristic (e.g., fill level, fill time, or the like) of the second grain cart. The system generates a second availability index for the second grain cart to approach a second harvester. Optionally, the second availability index is also based on the fill characteristic of the second grain cart. The system generates a third availability index for a third grain cart based on the transit time for a third grain cart to approach the first harvester. In some examples, the third availability index is also based on the fill characteristic of the third grain cart. The system generates a fourth availability index for the third grain cart based on the transit time for the third grain cart to approach the second harvester. In some examples, the fourth availability index is also based on the fill characteristic of the third grain cart.

The second grain cart and the third grain cart are dispatched according to their respective availability indexes. In an example, the first availability index is greater than the second availability index. For instance, the transit time for the second grain cart to approach the first harvester is less than the transit time for the second grain cart to approach the second harvester. Accordingly, the second grain cart is dispatched to the first harvester based on the first availability index being greater than the second availability index. In another example, the first availability index is greater than the third availability index. For instance, the transit time for the second grain cart to approach the first harvester is less than the transit time for the third grain cart to approach the second harvester. Thus, the second grain cart is dispatched to the first harvester based on the first availability index being greater than the third availability index. In yet another example, the third availability index is greater than the fourth availability index. For example, the transit time for the third grain cart to approach the first harvester is less than the transit time for the third grain cart to approach the second harvester. As a result, the third grain cart is dispatched to the first harvester based on the third availability index being greater than the fourth availability index.

In still yet another example, a cascaded cluster of autonomous directions are executed by a system for filling the plurality of grain carts. For instance, the cascaded cluster of autonomous directions are precipitated by direction of the first grain cart away from the harvester. For example, the first grain cart is directed to depart from the harvester, and the cascaded cluster of autonomous directions are executed by the system. The cascaded cluster of autonomous directions includes stopping flow of material from the grain spout of the harvester with the first grain cart at an offloading position proximate the harvester. The second grain cart is instructed to approach the offloading position proximate the harvester. The flow of material is started from the grain spout with the second grain cart in the offloading position. Accordingly, the cascaded cluster of autonomous directions are executed by the system (instead of human operators). For example, a human operator generates a signal (e.g., pushes a button, or the like) to have the system execute the cascaded cluster of autonomous directions. Thus, the system executes the cascaded cluster of autonomous directions, instead of the human operator. As a result, the efficiency of filling of the grain carts is enhanced by the system because the cascaded cluster of autonomous directions are executed by the system instead of by human operators.

### BRIEF DESCRIPTION OF THE DRAWINGS

- Figure 1: shows a plan view of an agricultural field with plurality of grain carts and a harvester.
- Figure 2: shows another plan view of the agricultural field with the plurality of grain carts and the harvester in a different position than the position shown in Figure 1.
- Figure 3: shows a schematic diagram of an example of a control system for an agricultural operation.
- Figure 4: shows yet another plan view of the agricultural field with the plurality of grain carts and the harvester in a different position than the position shown in Figure 1 or Figure 2.
- Figure 5: shows still yet another plan view of the agricultural field with the plurality of grain carts and the harvester, and a grain spout of the harvester is disabled.
- Figure 6: shows a further plan view of the agricultural field, with a first grain cart of the plurality of grain carts departing from the harvester.
- Figure 7: shows a still further plan view of the agricultural field, with the plurality of grain carts and the harvester, and a grain spout of the harvester is enabled.
- Figure 8: shows an example of a flowchart for dispatching of a grain cart.
- Figure 9: shows a plan view of another example of the agricultural field with a plurality of harvesters and the plurality of grain carts.
- Figure 10: shows another plan view of the agricultural field of Figure 9 with the plurality of harvesters and the plurality of grain carts in a different position than the position shown in Figure 9.
- Figure 11: shows a block diagram of an example machine upon which any one or more of the techniques discussed herein may perform.

### DETAILED DESCRIPTION

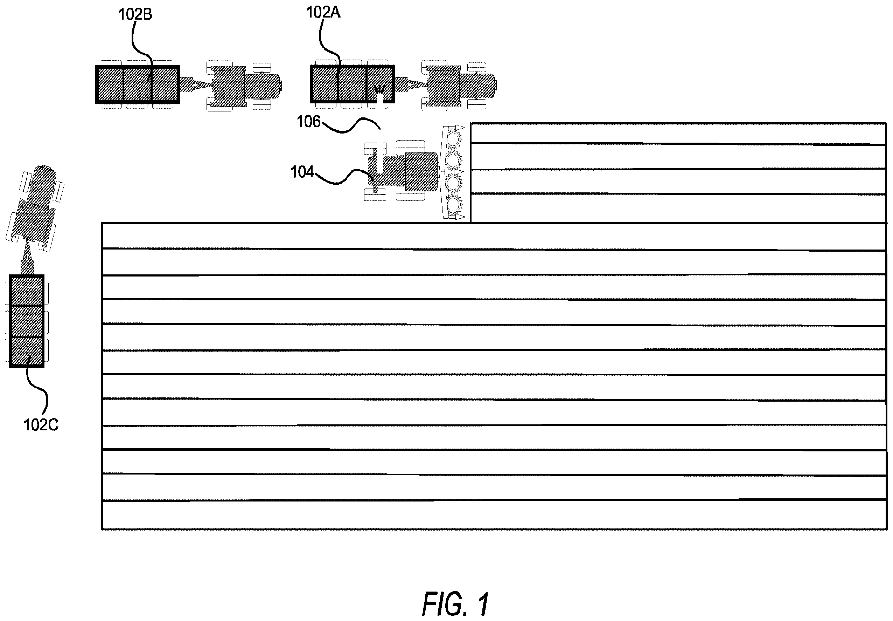

Figure 1 shows a perspective view of an agricultural field 100 with a plurality of grain carts 102 and a harvester 104 conducting an example harvesting operation. The harvester 104 is harvesting crops from the field 100. As shown in Figure 1, the harvester 104 deposits the crops into the plurality of grain carts 102, for instance in the first grain cart 102. As shown the harvester 104 includes a grain spout 106, and the grain spout 106 directs collected crops into the grain carts 102. The grain carts 102 transport the crops to a storage site (e.g., a tractor trailer, pile, silo, or the like).

Referring again to Figure 1, the grain carts 102 in the present example include a first grain cart 102A, a second grain cart 102B, and a third grain cart 102C. As shown, the first grain cart 102A is actively receiving collected crops from the grain spout 106. Accordingly, in this example, the first grain cart 102A is a primary grain cart. The second grain cart 102B and the third grain cart 102B are trailing the first grain cart 102A. Thus, in this example, the second grain cart 102B and the third grain cart 102C are queued grain carts.

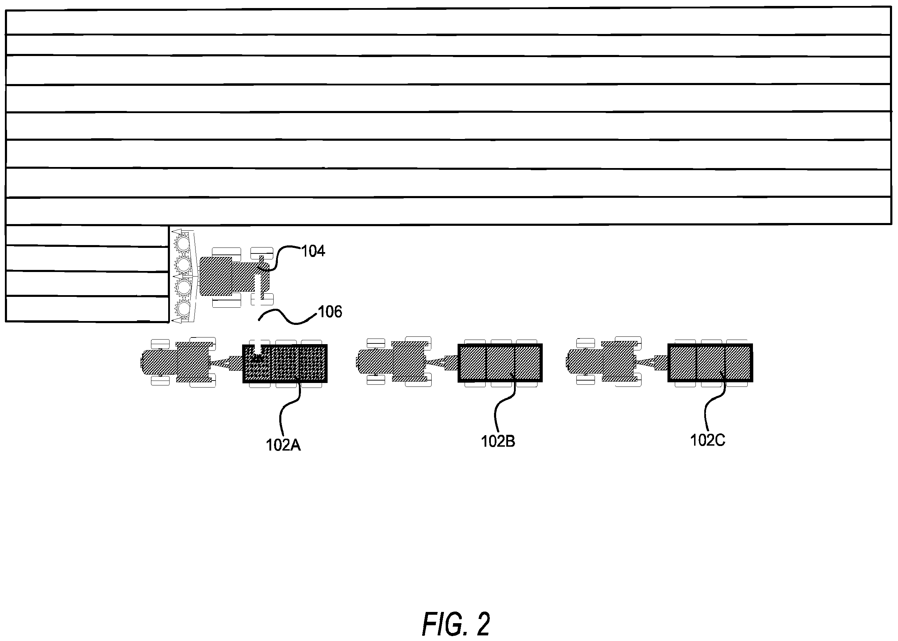

Figure 2 shows another perspective view of the agricultural field 100 with the plurality of grain carts 102 and the harvester 104 in a different position than the position shown in Figure 1. The harvester 104 travels throughout the agricultural field 100 collecting crops, and the harvester 104 deposits the crops in the grain carts 102. Accordingly, the grain carts 102 trail the harvester 104 as the harvester 104 travels throughout the agricultural field 100.

Figures 1 and 2 show the grain carts 102A, 102B following the harvester 104. In an approach, exchanging of the first grain cart 102A with the second grain cart 102B is difficult due to the coordination needed to exchange the grain carts while also controlling operation of the harvester and its grain spout 106. For instance, the exchanging of grain carts requires coordination between vehicles and operators of the vehicles to smoothly exchange the grain carts. In some approaches, harvesting is halted while the grain carts are exchanged in order to minimize spillage of crops from the harvester, for instance with harvesters having minimal onboard storage. Accordingly, in this approach, exchanging of grain carts results in down time for the harvester.

The present subject matter provides a solution to these problems, for example with a control system for an agricultural operation. The control system includes a queueing module that queues grain carts (e.g., in a line, in a train, or the like) behind a harvester. Accordingly, one or more grain carts are queued behind the harvester, ready to move into an offloading position and receive harvested crops once a preceding grain cart is full (e.g., including approaching a full condition). Down time of the harvester is minimized by the control system implementing queuing and control of the grain carts as described herein.

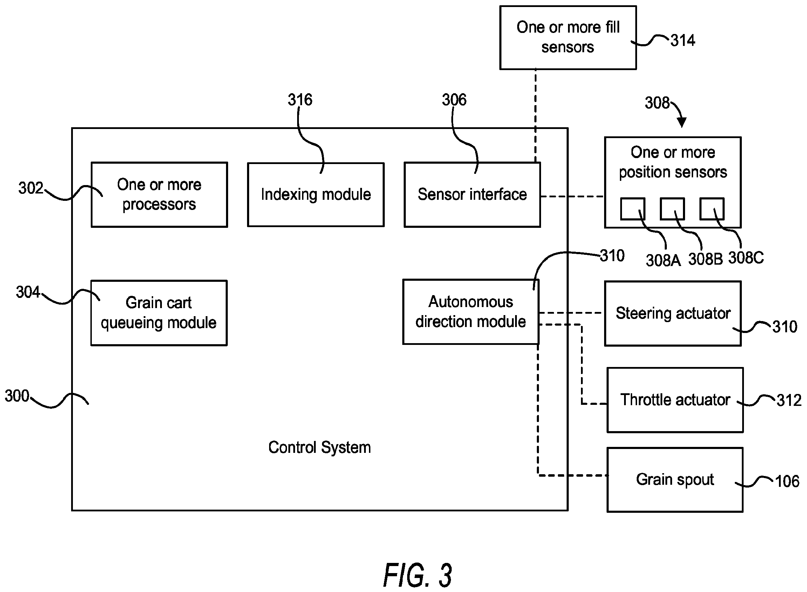

Figure 3 shows an example of a control system 300 for an agricultural operation. The control system 300 is installed with one of the agricultural vehicles (e.g., harvester, grain cart or the like), is optionally installed across multiple vehicles, or in another example is a remote system in communication with the agricultural vehicles. The control system 300 includes one or more processors 302. In an example, the processors 302 are configured to control one or more aspects of the agricultural operation. For example, a grain cart queueing module 304 is configured to queue grain carts behind one or more of a harvester or a preceding one of the grain carts, as described herein. In another example, the control system 300 includes a sensor interface 306 in communication with one or more sensors, for instance one or more position sensors 308. The position sensors 308 optionally include one or more of a global position sensor (GPS) or a real-time kinematic (RTK) sensor.

In yet another example, the control system 300 includes an autonomous direction module 310 in communication with actuators of one or more of the agricultural vehicles. The autonomous direction module 310 implements autonomous control of one or more of the harvester 104 or the grain carts 102 (shown in Figures 1 and 2). For instance, the autonomous direction module 310 communicates with one or more of a steering actuator 312, a throttle actuator 314 of one or more of the grain carts 102 or the harvester 104 to control maneuvering of the including direction, speed, transmission or the like of one or more of the grain carts (and optionally the harvester). In another example, the autonomous direction module controls the grain spout 106 (e.g., engaging or disengaging discharge of crops from the grain spout 106, optionally maneuvering the grain spout into alignment with portions of the grain cart). Accordingly, the control system 300 controls one or more aspects of the agricultural operation.

In one example, a first position sensor 308A is associated with the first grain cart 102A (shown in Figures 1 and 2). A second position sensor 308B is associated with the second grain cart 102B. A third position sensor 308C is associated with the harvester 104. The control system 300 monitors the location of the grain carts 102 and the harvester 104 within an agricultural field with the position sensors 308. The control system 104 includes an indexing module 316 that provides waypoints that permit autonomous direction with the direction module 310. For instance, the indexing module 316 uses the position sensors 308 to generate one or more waypoints within the agricultural field based on positions of preceding vehicles (e.g., of a preceding grain cart, harvester, both or the like). For instance, the indexing module 316 monitors the position of one or more agricultural vehicles and logs those positions in an ongoing manner relative to a field map or other coordinate system in the manner of indexed positions or 'breadcrumbs'. In this example, the waypoints are used by the grain carts 102 to follow one or more of a preceding grain cart, the harvester 104 or the like through the agricultural field.

In one example, the position sensor 308A of the first grain cart 102A in cooperation with the indexing module 316 establishes a first waypoint, a second waypoint, and so on as the cart 102A moves in the field. These waypoints are indexed along the path driven by the cart 102A, for instance while the harvester 104 fills the cart 102A. In another example, the harvester 104, its position sensor 308 and the indexing module 316 establish its first waypoint, second waypoint and so on as the harvester moves through the field conducting harvest operations. The second grain cart 102B (shown in Figures 1 and 2), having or making use of the autonomous direction module 310 uses the indexed waypoints to follow one or more of the first grain cart 102A or the harvester 104. For instance, the first waypoint and the second waypoint establish a trail of virtual 'breadcrumbs', and the second grain cart 102B follows the trail by moving along the indexed waypoints. As additional waypoints are logged with the indexing module 316 (as the first cart 102A or harvester 104 move) the second grain cart 102B continues to follow those additional waypoints. Optionally, speed, velocity, acceleration, heading or other kinematic characteristics of the grain cart 102A, harvester 104 or both are associated with the waypoints, separately logged or the like, and permit enhanced control of the following second grain cart 102B including, but not limited to, speed or velocity specification, acceleration (for approach to a specified trailing position), heading for turn control or the like.

Optionally, the control system 300 incorporates a cart offset into the first waypoint and the second waypoint. In one example, the control system 300 incorporates the cart offset with the indexed waypoints to ensure grain carts follow the harvester 104 at lateral positions (e.g., laterally offset waypoints). Accordingly, the first waypoint and the second waypoint are established at an offset from the harvester 104. For example, the cart offset facilitates the grain carts 102 travelling at the offloading position with respect to the harvester 104, or in the case of trailing second or third grain carts in a train or convoy that trails a preceding cart, such as the first grain cart 102A. Optionally, a vertical or longitudinal offset is generated to space grain carts, such as the second and third grain carts 102B, 102C, in a staggered train or convoy configuration relative to the first grain cart 102A or harvester 104.

In yet another example, the control system 300 associates a speed or velocity (e.g., vector) of the grain carts 102 with the indexed waypoints. For example, the first grain cart 102A (shown in Figures 1 and 2) travels at a first speed in correspondence with following of the harvester 104. The control system 300 establishes the first waypoint, and establishes the first speed of the grain cart 102A with the first waypoint. The second grain cart 102B follows the harvester 104 using the waypoints, and travels at the first speed from the first waypoint to the second waypoint. Accordingly, the control system 300 autonomously moves the grain cart 102B to follow one or more of the first grain cart 102A or the harvester 104 (shown in Figures 1 and 2). In another example, for instance if the second grain cart 102B is approaching the first grain cart 102A or harvester and is not yet in a staggered train or convoy position as shown in Figures 1 and 2, the indexed speeds permit acceleration of the second grain cart 102B to facilitate its approach to the cart 102A or harvester 104 and entry into the train or convoy position shown.

In another example, and referring to Figure 3 again, a fill characteristic of the grain carts is monitored, for instance with one or more fill sensors 314. For instance, the grain carts 102 include the fill sensors 314, and the fill sensors 314 monitor the fullness of the grain carts. The control system 300 uses the sensor interface 306 to communicate with the one or more fill sensors 314. The fill sensors 314 include one or more of a weight sensor, a visual sensor (e.g., a human eye, an optical detector, infrared detector, or the like).

As described herein, the fill sensors 314 permit tracking of grain cart filling, and in some examples initiate dispatch of a filled first grain cart 102A, for instance in a cascade of instructions that trigger autonomous exchange of grain carts such as escalation of the second (empty) grain cart 102B into a filling position relative to the harvester 104 while toggling operation of the grain spout 106 for offloading.

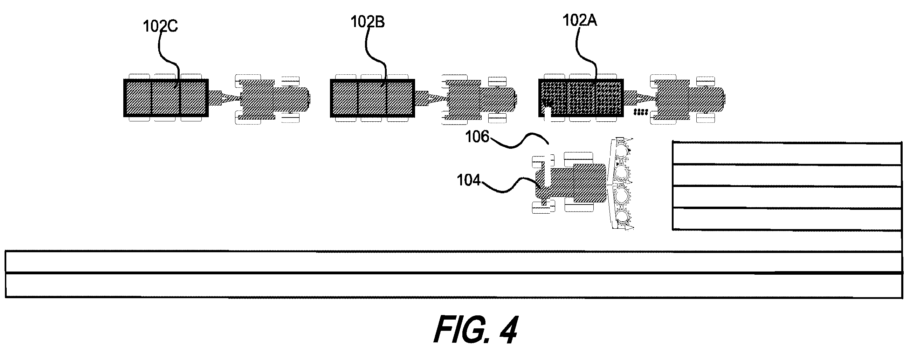

Figure 4 shows yet another perspective view of the agricultural field 100 with the plurality of grain carts 102 and the harvester 104 in a different position than the position shown in Figure 1 or Figure 2. The grain cart 102A in this example is filled as shown with stippling. Figure 4 further shows the grain spout 106 discharging crops into the grain cart 102A (signified by the lines broadcasting from the grain spout 106). In the present example, the grain cart 102A is dispatched from the harvester 104 to a storage site (e.g., truck, grain elevator or the like) based on the grain cart 102A fill status. In one example, upon the fill sensor 314 (see Figure 3) indicating a fill characteristic above a specified threshold the autonomous direction module 310 (shown in Figure 3) dispatches the grain cart 102 and controls the steering actuator 310 and the throttle actuator 312 to direct the grain cart 102A away from the harvester 104 and toward the storage site. In another example, dispatching of the grain cart 102A is initiated by a harvester 104 operation (e.g., a driver) upon noticing the grain cart 102A is filled or when receiving a fill sensor 314 notification indicating the cart is filled (including approaching filled).

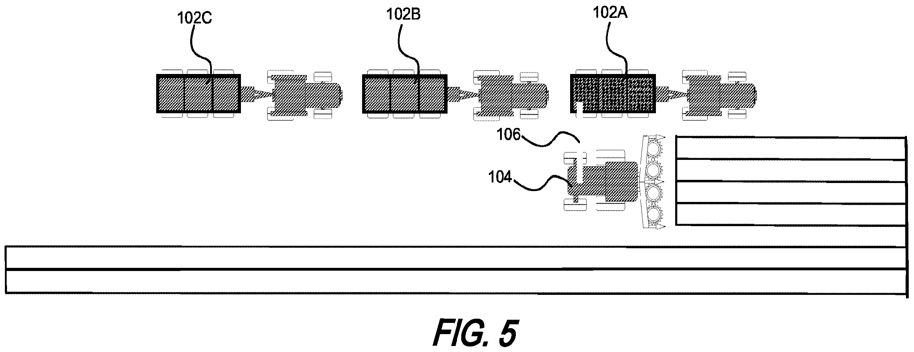

Figure 5 shows still yet another perspective view of the agricultural field 100 with the plurality of grain carts 102, the harvester 104, and the grain spout 106 of the harvester 104 is arrested or disabled to decrease crop spilling as the cart 102A pulls away from the harvester 104. In an example, a subset of the plurality of grain carts 102 are conducted with a cascaded cluster of autonomous directions. For example, the autonomous direction module 310 controls the harvester 102 and the grain carts 102 to execute the cascaded cluster of autonomous directions. For instance, an operator issues a signal (e.g., by pressing a button, or the like) to direct the first grain cart 102A to depart from the harvester 104. In another example, the cascaded cluster of autonomous directions includes disabling of the grain spout 106. For instance, the autonomous direction module 310 communicates with the grain spout 106 to disable the grain spout 106. Disabling of the grain spout 106 ceases transfer of crops from the harvester 104 to the grain cart 102A. Figure 5 shows the first grain cart 102A is in an offloading position (e.g., the grain cart 102A is aligned with the grain spout 106 of the harvester 104, or the like). Additionally, Figure 5 shows the grain spout 106 is disabled (signified by a lack of lines broadcasting from the grain spout 106). Further, Figure 5 shows the second grain cart 102B is queued behind the first grain cart 102A. Still further, Figure 5 shows the third grain cart 102C is queued behind the second grain cart 102B. For example, the second grain cart 102B and the third grain cart 102C follow waypoints established by the first grain cart 102A.

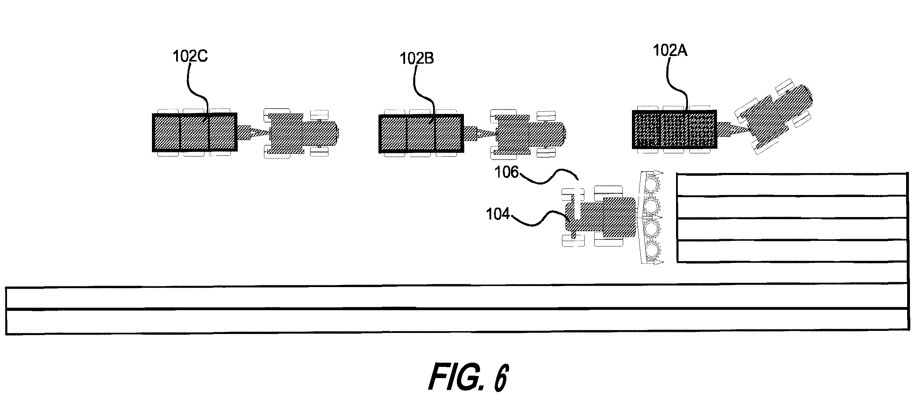

Figure 6 shows a further perspective view of the agricultural field 100, with the first grain cart 102A of the plurality of grain carts departing from the harvester 104. In an example, the first grain cart 102A is directed to depart from the harvester 104, for example by the autonomous direction module 310. Figure 6 shows the first grain cart 102A is not in the offloading position (e.g., the first grain cart 102A is not aligned with the grain spout 106 of the harvester 104). In another example, the first grain cart 102A is dispatched to the storage site. Accordingly, in this example, the first grain cart 102A is a transporting grain cart (e.g., the first grain cart 102A is full, and transports a load of crops to the storage site). Thus, the second grain cart 102B is able to approach the offloading position. For example, the second grain cart 102B is instructed to approach the offloading position once the grain spout 106 is disabled. Accordingly, the second grain cart 102A becomes the primary grain cart.

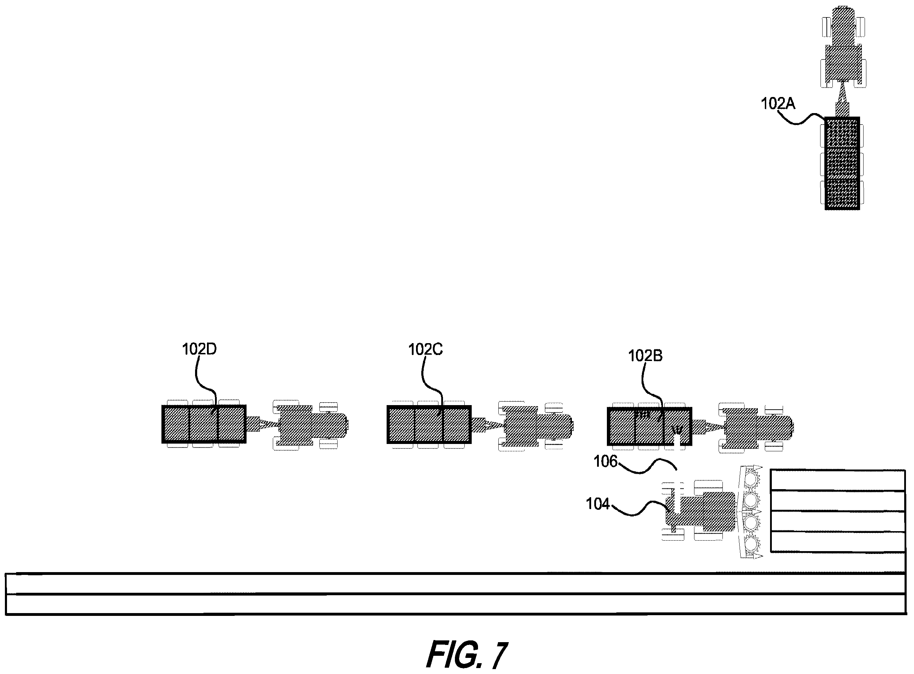

Figure 7 shows a still further perspective view of the agricultural field 100, with the plurality of grain carts 102 and the harvester 104. The grain spout 106 of the harvester 104 is enabled (signified by lines broadcasting from the grain spout 106). In an example, the cascaded cluster of autonomous instructions (executed by the control system 300, shown in Figure 3) includes enabling the grain spout 106 of the harvester 104 (e.g., to start flow of material from the grain spout, or the like). Figure 7 shows the second grain cart 102B is in the offloading position (e.g., the second grain cart 102B is aligned with the grain spout 106 of the harvester 104). Accordingly, enabling of the grain spout 106 starts the flow of material from the grain spout 106, and the harvester 104 fills the second grain cart 102B with crops. Additionally, Figure 7 shows the third grain cart 102C queued behind the second grain cart 102B. Further, Figure 7 shows a fourth grain cart 102D queued behind the third grain cart 102C. The third and fourth grain carts 102C, 102D are empty and accordingly ready to replace the second grain cart 102B once it approaches full.

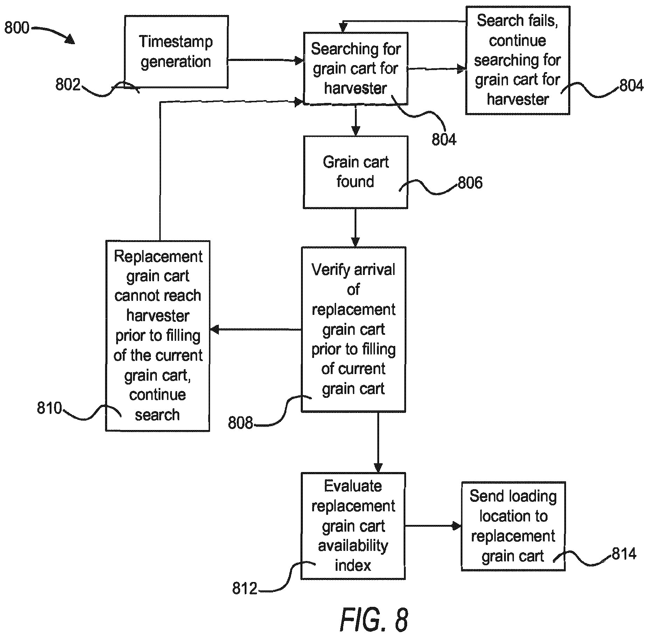

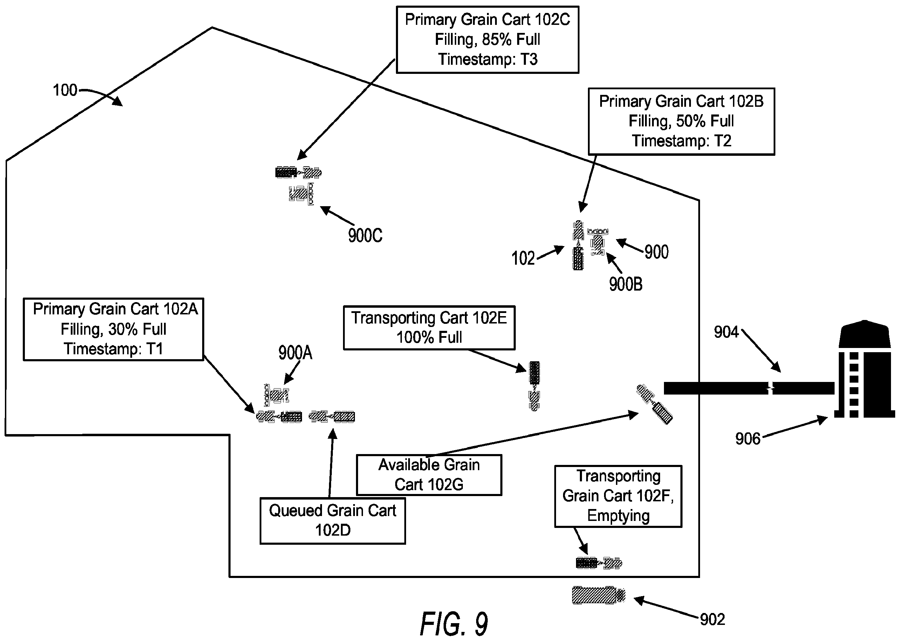

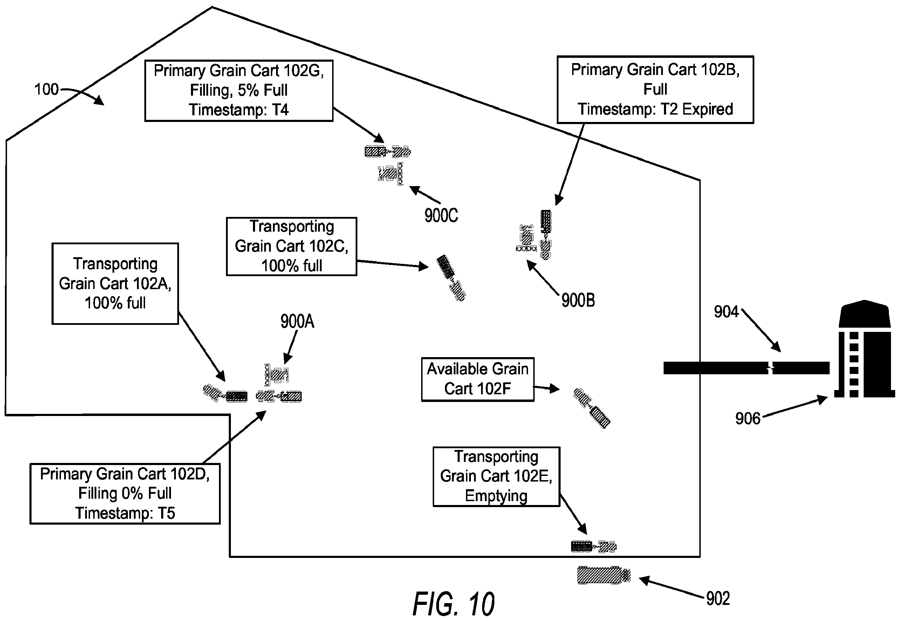

Figure 8 shows an example method 800 for forecasting and directing agricultural vehicles to one or more other agricultural vehicles or locations, for instance implemented with the control system 300 shown in Figure 3. In the context of the method 800 and associated system 300, one or more of the steps described herein are conducted by one or more agricultural vehicles (harvester, mower, grain cart, bailer or the like), such as processors associated with the vehicles, or a separate processor, for instance a network including a cloud network. In the examples shown in Figures 9 and 10 the method 800 is applied to example agricultural circumstances reflected in a field having various vehicles and characteristics to forecast and dispatch one or more grain carts.

In an example, a timestamp is generated (e.g., by the harvester 104, processor, network or the like) at 802 that corresponds with the first grain cart 102A reaching a full status (including an estimated full status). For example, the timestamp indicates a predicted time the first grain cart 102A will reach a full status. The timestamp is used, for instance, by the method 800 (implemented with one or more processors) to determine a time the first grain cart 102A is scheduled or specified for replacement by the second grain cart 102B.

In another example, the control system 300 implementing the method 800 (e.g., by way of one or more of the vehicles, processors, network or the like) searches for a replacement grain cart at 804. In a first example the method 800 searches for another grain cart 102 (e.g., between 102B-G or the like) . As described herein, a 'found' grain cart will satisfy one or more criteria, such as thresholds representing fill status, time of arrival, distance to a harvester, use status at another harvester, vehicle or location or the like. If the assembly (e.g., implementing the method 800) fails to find a replacement grain cart 102, the assembly continues searching at 804 until finding a replacement grain cart. Alternatively, if after a specified period, loops or the like a replacement grain cart 102 (satisfying criterion) is not located the system alerts an operator to the failure to locate a grain cart. Once the system 300 finds a replacement grain cart 102 at 806, the system 300 verifies arrival (including future arrival) of the replacement grain cart proximate to filling of the current grain cart at 808. Proximate arrival includes, but is not limited to, arrival prior to filling, arrival upon filling or immediately after (e.g., within 5 minutes or less, 1 minute or less, 15 seconds or less or the like). Stated another way, the harvester 104 verifies arrival of the replacement grain cart proximate to expiration of the timestamp for the current grain cart to reach full status. If the replacement grain cart 102 cannot reach the harvester 104 prior to filling of the current grain cart 102 (e.g., the first grain cart 102A, or the like), the system 300 optionally continues searching for a replacement grain cart 102 (e.g., the second grain cart 102B-G, or the like) at 810 that will reach the harvester 104 proximate to filling of the current grain cart 102.

In yet another example, an availability index of the replacement grain cart is evaluated at 812, for example by the system 300 (shown in Figure 3). The availability index includes one or more characteristics that permit evaluation of grain carts and selection of grain carts for assignment (dispatching) to one or more harvesters. In an example, the availability index includes one or more of proximity of the replacement grain cart 102 to a specified harvester 104, represented in one example with transit time of the grain carts 102 to approach the harvester 104, a fill characteristic of the grain carts 102 under evaluation or the like. For instance, the availability index is generated based on transit time between the grain carts 102 under consideration by the system and the harvester 104 having a grain cart 102 approaching its time stamp (e.g., full status). In another example, the availability index is generated based on the fill characteristic of the grain carts 102. In still yet another example, the availability index is generated based on dimensional characteristics of the grain carts 102. For instance, the availability index for a grain cart is generated based on the size of the respective grain cart 102, whether there are multiple carts associated with one hauler (e.g., one or more are in a train behind a presently filling cart), or the like. The availability index for a 'found' grain cart 102 (see 806) is, in one example, a confirmation tool that permits evaluation of the grain cart 102 as satisfying the offloading needs of an associated harvester 104.

With the availability index for the replacement grain cart 102 evaluated, the system sends a loading location to the replacement grain cart 102 at 814. The replacement grain cart 102 is dispatched to the harvester 104 at loading location (e.g., to meet the in process harvester 104). The replacement grain cart 102 approaches the harvester 104 as the harvester 104 loads the current grain cart 102 with crops. The replacement grain cart 102 moves into a trailing position (e.g., in the manner of a train or convoy) relative to the current grain cart 102, and is thereafter ready to replace the current grain cart 102 when the current grain cart reaches full (e.g., the present time corresponds with the time stamp, a fill sensor indicates the current cart is full or the like).

Figure 9 shows a plan view of one example of the agricultural field 100 with a plurality of harvesters 900 and a plurality of grain carts 102 at various locations and with varying characteristics. In an example, the filling, dispatching and associated travel of the grain carts 102 are orchestrated with the method 800 or system 300 to decrease stoppage of at least one harvester (potentially all) of the plurality of harvesters 900. For instance, a fill characteristic of the grain carts 102 is monitored by the system 300 (shown in Figure 3). In an example, a fill characteristic of the first grain cart 102A is monitored. The fill characteristic includes one or more of a fill time (such as a timestamp, a time remaining to fill to a specified threshold) of the first grain cart 102A, or a fill level of the first grain cart 102A. For example, a fill time for the first grain cart 102A is forecasted to determine how long it will take for the grain cart 102A to achieve a full threshold. This is an example of a timestamp as discussed with the method 800. Accordingly, in an example, a first timestamp T1 (at least initially later than a present time T0) is issued for the first grain cart 102A that corresponds with a time the grain cart 102A is estimated to reach a full status.

In another example, Figure 9 shows a first harvester 900A, a second harvester 900B, and a third harvester 900C. The harvesters 900 are filling respective grain carts 102. For instance, the first harvester 900A fills the first grain cart 102A, the second harvester 900B fills the second grain cart 102B, and the third harvester 900C fills the third grain cart 102C. The fill characteristic is assessed for the first, second, and third grain carts 102A, 102B, 102C. For instance, the first grain cart 102A is 30 percent full, the second grain cart 102B is 50 percent full, and the third grain cart is 85 percent full.

In another example, the respective fill characteristics include either or both of the fill level or a timestamp corresponding to an estimated time each of the grain carts 102 will fill (e.g., based on present fill level, rate of fill change or flow rate of harvested crop from the associated harvester 104, or the like).In yet another example of respective fill characteristics, the system 300 generates timestamps based on the assessed fill status of the grain carts 102. For instance, the system 300 generates the first timestamp T1 for the first grain cart 102A based on the first grain cart 102A being 30 percent full and optionally a present flow rate or yield measured by the associated harvester or determined with fill sensors 314 (e.g., load cells, optical sensors or the like). The system 300 generates a second timestamp T2 for the second grain cart 102B based on the second grain cart 102B being 50 percent full and optionally flow rate, yield, change in load or weight in the cart or the like. The system 300 generates a third timestamp T3 for the third grain cart 102C based on the third grain cart 102C being 85 percent full (and optionally the flow rate, yield or the like as noted above). The third timestamp T3 is less than second timestamp T2, and less than the first timestamp T1 because the third grain cart 102C is most full (e.g., 85 percent full and) in comparison to the first and second grain carts 102A, 102B (e.g., 30 percent and 50 percent full, respectively). In another example, monitoring of flow rate, yield, changes in load or weight of the grain cart or the like permit further refinement of the time stamps as noted above. For instance a second flow rate of the for the second grain cart 102B greater than a third flow rate for the third grain cart 102C may (depending on the flow rates) change the second timestamp T2 for the second grain cart 102B to an earlier time than the third timestamp T3 for the third grain cart 102C.

As further shown in Figure 9, a fourth grain cart 102D is queued behind the first grain cart 102A in the manner of a train, convoy, chain or array of carts or the like. A fifth grain cart 102E is filled to its threshold with crops, and is accordingly transporting the crops to a storage site 902. A sixth grain cart 102F is located proximate to the storage site 902 and is emptying its crops into the storage site 902. In another example, the grain carts 102 are transported over a roadway 904 to another storage site 906. A seventh grain cart 102G is available for dispatch to one or more of the harvesters 900. For example, the grain cart 102G has previously emptied its load at the storage site 902. Thus, the fill characteristic (in this example, fill level) for the grain cart 102G is empty. Accordingly, the grain cart 102G is available for immediate dispatch to one of the harvesters 900.

For example, the grain cart 102G is dispatched to the harvester 900 with the smallest timestamp (e.g., nearest timestamp, the timestamp closest to expiring, or the like). In this example, the third timestamp T3 (as an example of an availability index) is less than the first timestamp T1 and the second timestamp T2. Accordingly, the grain cart 102C having the third timestamp T3 is in most urgent need for replacement of the grain cart 102B. Thus, the available grain cart 102G is dispatched by the system 300 to the harvester 900C to replace the grain cart 102C as the grain cart 102C reaches a full threshold (e.g., proximate to its timestamp T3). In another example, the system 300 (shown in Figure 3) dispatches the available grain cart 102G to the harvester 900C if the transit time (optionally, another component of the availability index) for the grain cart 102G from its present location to approach the harvester 900C is proximate to (including less than) the timestamp for the current grain cart 102C. For example, the system 900 verifies arrival of the available grain cart 102G prior to the current grain cart 102C reaching a full threshold (or proximate to its timestamp T3). In another example, if the replacement grain cart 102G cannot reach the harvester 102C proximate to filling of the current grain cart 102C (including, optionally, prior to filling), the system 300 continues searching for a new grain cart 102 to replace the current grain cart 102C that better fits the circumstances of the current grain cart 102C (e.g., will arrive more proximate to the timestamp T3 of the third grain cart 102C than the previously considered grain cart 102G).

In another example, an availability index for the grain cart 102G is generated based on (at least) the fill characteristic of the grain carts 102A, 102B, 102C. For instance, a first availability index for the seventh grain cart 102G is generated based on the fill characteristic of the first grain cart 102A. A second availability index for the seventh grain cart 102G is generated based on the fill characteristic of the second grain cart 102B. A third availability index for the seventh grain cart 102G is generated based on the fill characteristic of the third grain cart 102C. In an example, the first availability index is less than the second availability index because the fill characteristic of the first grain cart 102A (e.g., fill level of 30 percent, or the like) is less than the fill characteristic of the second grain cart 102B (e.g., fill level of 50 percent, or the like). In another example, the second availability index is less than the third availability index because the fill characteristic of the second grain cart 102B (e.g., fill level of 50 percent, or the like) is less than the fill characteristic of the third grain cart 102C (e.g., fill level of 85 percent, or the like). Accordingly, the third availability index exceeds the first availability index and the second availability index. As provided herein, in an example, the grain cart 102G is dispatched based on these respective availability indexes.

The seventh (e.g., replacement, available, or the like) grain cart 102G is dispatched to the third harvester 900C in correspondence with the third availability index exceeding an index threshold. For instance, the third availability index is greater than the first and second availability indexes. For example, the index threshold includes a threshold value of the availability index value, and an availability index that exceeds the threshold value dictates where the available grain cart 102G is dispatched to. In one example, the index threshold includes a collection of the availability indexes of the various grain carts, and the index threshold includes one of the collection of the availability indexes. For instance, the first and second availability indexes of the first and second grain carts 102A, B are part of the collection of availability indexes, and accordingly form a basis for the index threshold. The third availability index exceeds the first and second availability indexes, and thus the third availability index exceeds the index threshold (of the collection of other availability indexes). Stated another way, the third availability index is greater than the first and second availability indexes. Accordingly, the third availability index exceeds the index threshold comprising the collection of the availability indexes. The grain cart 102G associated with the third availability index is thereby selected for dispatch to the harvester 900C. Thus, in this example the collection of the lower availability indexes (or potentially, just the second highest availability index) are the index threshold, and the grain cart 102 selected for dispatching has an availability index that is greater than the index threshold (the lower availability indexes).

In another example, the availability index is assessed based on a fill characteristic of a harvester grain bin. For example, the harvester grain bin stores a limited quantity of crop in comparison to the grain carts 102. Accordingly, the harvester grain bin in this examples approaches a full status more rapidly in comparison to the grain carts 102. Thus, monitoring of the fill characteristic for the harvester grain bin is conducted (by themselves or in combination with the grain carts 102) to establish availability indexes for the grain carts 102.

In yet another example, the availability index is generated based on one or more of the fill characteristics and transit times for the grain carts 102 to approach the harvesters 900. For example, the transit time for the available grain cart 102G to approach the second harvester 900B is less than the transit time for the available grain cart 102G to approach the third harvester 900C or first harvester 900A. One or more of the transit times is included in the example availability index for the grain cart 102G. Optionally a plurality, including all, of the transit times are included in the example availability index for the associated grain cart 102G. In another example, transit times for the grain carts 102 to approach the harvesters 900 is included with (and potentially refines) the availability index for the grain carts 102. For instance, the transit times for the grain carts 102 to approach the harvesters 900 can increase or decrease an availability index for an available grain cart (e.g., cart 102G) of the plurality of grain carts 900. An availability index with greater value is indicative of a greater likelihood that a grain cart will be dispatched. For example, a grain cart 102E (in this hypothetical having the location shown, but zero percent full) has a relatively high availability index because of its relative proximity to each of the harvesters 900A, B, and even 900C in comparison to other more "full" grain carts. Stated another way, the availability index for an available (e.g., replacement) grain cart is optionally impacted by the transit time for the available grain cart to approach a respective one of the harvesters 900. In another option, in a circumstance with the harvester 900 (e.g., 900C) having a proximate timestamp T3 availability indexes are determined for and associated with the grain carts 102 and are based on the calculation for transit to the harvester 900C (and optionally fill characteristics) because that harvester 900C has the immediate need. In this example, the availability indexes for each of the grain carts 102 is based on one (or a subset) of the harvesters instead of each of the harvesters.

In another example, the system 300 (shown in Figure 3) orchestrates filling of the grain carts 102. For instance, orchestration of the filling of the plurality of grain carts 102 includes assessing availability of a subset of the plurality of grain carts to identify a second grain cart (e.g., the fourth grain cart 102D) of the plurality of grain carts to replace the first grain cart 102A. In yet another example, assessing availability of the subset of the plurality of grain carts 102 includes generating an availability index for each of the subset of the plurality of grain carts 102 as described herein. In one example, assessing availability of the subset of the plurality of grain carts 102 includes determining a fill characteristic of the second grain cart (e.g., as an example of an availability index or component of the index). In another example, assessing availability of the subset of the plurality of grain carts 102 includes determining a transit time for the second grain cart to approach a harvester (e.g., as an example of an availability index or component of the index). In this example, the transit time for the fourth grain cart 102D to the first harvester 102A is low because the fourth grain cart 102D is trailing the first grain cart 102A and is thereby proximate to the first harvester 102A. The transit time for the fourth grain cart 102D to approach the first harvester 102A is thereby less than the transit time of the seventh grain cart 102G to approach the first harvester 102A. The transit times of each of the grain carts 102 thereby vary based on the location of the grain carts 102, the locations of the harvesters 900, as well as heading, speed or the like of the carts 102 and harvesters 900, all of which contribute to the transit times.

Figure 10 shows another perspective of the agricultural field 100 of Figure 9 with the plurality of harvesters 900 and the plurality of grain carts 102 in a different position than the position shown in Figure 9. For example, Figure 10 shows the fourth grain cart 102D has replaced the first grain cart 102A at the first harvester 900A. The seventh grain cart 102G has replaced the third grain cart 102C at the third harvester 900C. Accordingly, the system 300 (shown in Figure 3) issues timestamps T4 and T5 for the grain carts 102G, 102D respectively. The timestamps T4 and T5 signify when the grain carts 102G, 102D (respectively) will be full. Figure 10 shows the timestamp T2 for the second grain cart 102B has expired. Accordingly, the harvester 900B has stopped harvesting crops. Thus, the availability index for the sixth grain cart 102F with respect to the second harvester 900B is relatively high.

For example, the system 300 generates a first availability index for the available grain cart 102F based on the fill characteristic for the grain cart 102F, the fill characteristic of the primary grain cart 102D, and the transit time to the first harvester 900A. The system 300 generates a second availability index for the available grain cart 102F based on the fill characteristic for the grain cart 102F, the fill characteristic of the primary grain cart 102B, and the transit time to the second harvester 900B. Further, the system 300 generates a third availability index for the grain cart 102F based on the fill characteristic for the grain cart 102F, the fill characteristic of the primary grain cart 102G, and the transit time to the third harvester 900C. The timestamp T2 has expired and accordingly, the fill characteristic for the grain cart 102B is a full status. In contrast, the primary grain carts 102D, 102G are 0% and 5% full respectively. The transit time for the grain cart 102F is lowest for the second harvester 900 (e.g., based on proximity of the grain cart 102F to the harvester 900B, or the like). Accordingly, the second availability index exceeds the first and third availability indexes, for instance because the grain cart 102B is full and the grain carts 102D, 102G are relatively empty. As a result, the sixth grain cart 102F is dispatched to the second harvester 900B to replace the second grain cart 102B, and restore operation of the harvester 102B. In contrast, the third grain cart 102C is full and accordingly has a relatively low availability index with respect to the second harvester 900B. Thus, the sixth grain cart 102F is dispatched to the second harvester 900B instead of the third grain cart 102C (which is closer in proximity to the second harvester 900B).

In another example, the primary grain cart 102G is 95% full, and the time is T4' (e.g., proximate time T4). The grain cart 102E has emptied its contents, and accordingly has an empty fill characteristic. Thus, the availability index for the grain cart 102E is relatively high, and the grain cart 102E is ready for dispatch to replace a grain cart 102. In contrast, the grain carts 102B, 102C are offloading at the storage site 902, and accordingly have a relatively low availability index. Similarly, the grain cart 102A transported its load to the storage site 906 over the road 904. Accordingly, the transit time for the grain cart 102A is high, and the grain cart 102A has a relatively low availability index (lower than the grain carts 102B, 102C) with respect to the harvesters 900.

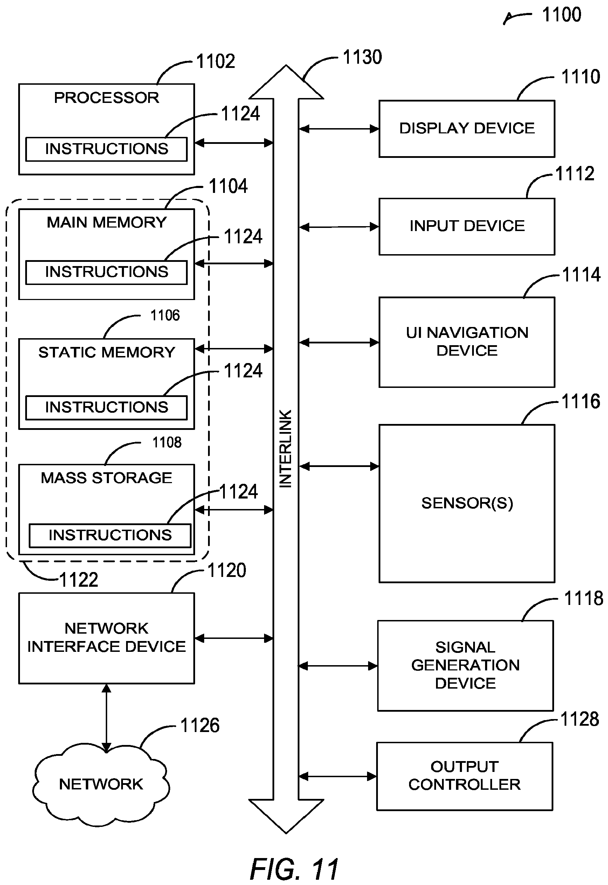

Figure 11 shows a block diagram of an example machine 1100 upon which any one or more of the techniques (e.g., methodologies) discussed herein may perform. Examples, as described herein, may include, or may operate by, logic or a number of components, or mechanisms in the machine 1100. Circuitry (e.g., processing circuitry) is a collection of circuits implemented in tangible entities of the machine 1100 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 1100 follow.

In alternative embodiments, the machine 1100 may operate as a standalone device or may be connected (e.g., networked) to other machines. In a networked deployment, the machine 1100 may operate in the capacity of a server machine, a client machine, or both in server-client network environments. In an example, the machine 1100 may act as a peer machine in peer-to-peer (P2P) (or other distributed) network environment. The machine 1100 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. The machine (e.g., computer system) 1100 may include a hardware processor 1102 (e.g., a central processing unit (CPU), a graphics processing unit (GPU), a hardware processor core, or any combination thereof), a main memory 1104, a static memory (e.g., memory or storage for firmware, microcode, a basic-input-output (BIOS), unified extensible firmware interface (UEFI), etc.) 1106, and mass storage 1108 (e.g., hard drive, tape drive, flash storage, or other block devices) some or all of which may communicate with each other via an interlink (e.g., bus) 1130. The machine 1100 may further include a display unit 1110, an alphanumeric input device 1112 (e.g., a keyboard), and a user interface (UI) navigation device 1114 (e.g., a mouse). In an example, the display unit 1110, input device 1112 and UI navigation device 1114 may be a touch screen display. The machine 1100 may additionally include a storage device (e.g., drive unit) 1108, a signal generation device 1118 (e.g., a speaker), a network interface device 1120, and one or more sensors 1116, such as a global positioning system (GPS) sensor, compass, accelerometer, or other sensor. The machine 1100 may include an output controller 1128, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 1102, the main memory 1104, the static memory 1106, or the mass storage 1108 may be, or include, a machine readable medium 1122 on which is stored one or more sets of data structures or instructions 1124 (e.g., software) embodying or utilized by any one or more of the techniques or functions described herein. The instructions 1124 may also reside, completely or at least partially, within any of registers of the processor 1102, the main memory 1104, the static memory 1106, or the mass storage 1108 during execution thereof by the machine 1100. In an example, one or any combination of the hardware processor 1102, the main memory 1104, the static memory 1106, or the mass storage 1108 may constitute the machine readable media 1122. While the machine readable medium 1122 is illustrated as a single medium, the term "machine readable medium" may include a single medium or multiple media (e.g., a centralized or distributed database, and/or associated caches and servers) configured to store the one or more instructions 1124.

The term "machine readable medium" may include any medium that is capable of storing, encoding, or carrying instructions for execution by the machine 1100 and that cause the machine 1100 to perform any one or more of the techniques of the present disclosure, or that is capable of storing, encoding or carrying data structures used by or associated with such instructions. Non-limiting machine readable medium examples may include solid-state memories, optical media, magnetic media, and signals (e.g., radio frequency signals, other photon based signals, sound signals, etc.). In an example, a non-transitory machine readable medium comprises a machine readable medium with a plurality of particles having invariant (e.g., rest) mass, and thus are compositions of matter. Accordingly, non-transitory machine-readable media are machine readable media that do not include transitory propagating signals. Specific examples of non-transitory machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 1124 may be further transmitted or received over a communications network 1126 using a transmission medium via the network interface device 1120 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.11.4 family of standards, peer-to-peer (P2P) networks, among others. In an example, the network interface device 1120 may include one or more physical jacks (e.g., Ethernet, coaxial, or phone jacks) or one or more antennas to connect to the communications network 1126. In an example, the network interface device 1120 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 1100, and includes digital or analog communications signals or other intangible medium to facilitate communication of such software. A transmission medium is a machine readable medium.

### Various Notes & Aspects

Example 1 is a method of filling a plurality of grain carts with a grain spout off of a harvester, the method comprising: directing a first grain cart to follow the harvester at an offloading position with respect to the harvester; directing a second grain cart to follow the harvester or the first grain cart, wherein directing the second grain cart includes: establishing a first waypoint with a position sensor of the first grain cart or the harvester; establishing a second waypoint with the position sensor of the first grain cart or the harvester; autonomously moving the second grain cart to the first waypoint; and autonomously moving the second grain cart from the first waypoint to the second waypoint.

In Example 2, the subject matter of Example 1 optionally includes wherein the position sensor is associated with the first grain cart, and the first grain cart establishes the first waypoint and the second waypoint.

In Example 3, the subject matter of any one or more of Examples 1-2 optionally include wherein the position sensor is associated with the harvester, and the harvester establishes the first waypoint and the second waypoint.

In Example 4, the subject matter of any one or more of Examples 1-3 optionally include wherein the position sensor includes one or more of a global position sensor or a real-time kinematic sensor.

In Example 5, the subject matter of any one or more of Examples 1-4 optionally include wherein establishing the first waypoint or the second waypoint includes incorporating a cart offset into the first waypoint or the second waypoint.

In Example 6, the subject matter of Example 5 optionally includes wherein the cart offset changes a position of the first waypoint or the second waypoint to enable the offloading position with respect to the harvester.

In Example 7, the subject matter of any one or more of Examples 1-6 optionally include establishing a first speed associated with the first waypoint; and autonomously moving the second grain cart to the second waypoint includes the second grain cart travelling at the first speed.

Example 8 is a control system for an agricultural operation, the control system comprising: a position sensor associated with at least one grain cart; one or more processors, the processors including a grain cart queueing module configured to direct the at least one grain cart to follow a harvester or a preceding grain cart, the one or more processors configured to: generate one or more waypoints based on an actual position of the harvester or the preceding grain cart; autonomously direct the at least one grain cart along the one or more waypoints based on the actual position of the harvester or the preceding grain cart; and move the at least one grain cart along the one or more waypoints according to the autonomous direction.

In Example 9, the subject matter of Example 8 optionally includes an autonomous direction module configured to issue a cascaded cluster of autonomous directions to the one or more grain carts and the harvester, the cascaded cluster of autonomous directions including: stopping flow of material from the grain spout of the harvester with a first grain cart at an offloading position; instructing a second grain cart to approach the offloading position; and starting flow of material from grain spout with the second grain cart in the offloading position.

In Example 10, the subject matter of Example 9 optionally includes wherein the cascaded cluster of autonomous directions includes guiding the first grain cart to depart from the offloading position.

In Example 11, the subject matter of any one or more of Examples 8-10 optionally include a position sensor associated with a harvester, and the harvester establishes the one or more waypoints.

In Example 12, the subject matter of any one or more of Examples 8-11 optionally include wherein the position sensor includes one or more of a global position sensor or a real-time kinematic sensor.

In Example 13, the subject matter of any one or more of Examples 8-12 optionally include wherein: the one or more waypoints includes a first waypoint and a second waypoint; the one or more processors are configured to establish a first speed associated with the first waypoint; the one or more processors are configured to autonomously move the second grain cart from the first waypoint to the second waypoint at the first speed.

Example 14 is a method of filling a plurality of grain carts with a grain spout off of a harvester, the method comprising: directing a first grain cart of the plurality of grain carts to depart from the harvester; conducting a subset of the plurality of grain carts with a cascaded cluster of autonomous directions precipitated by direction of the first grain cart: stopping flow of material from the grain spout of the harvester with the first grain cart at an offloading position proximate the harvester; instructing a second grain cart of the plurality of grain carts to approach the offloading position; and starting flow of material from the grain spout with the second grain cart in the offloading position.

In Example 15, the subject matter of Example 14 optionally includes wherein conducting the array of grain carts includes assessing availability of a subset of the plurality of grain carts to identify the second grain cart of the plurality of grain carts to replace the first grain cart.

In Example 16, the subject matter of any one or more of Examples 14-15 optionally include wherein conducting the array of grain carts with the cascaded cluster of autonomous directions includes determining respective fill levels of the array of grain carts using one or more fill sensors associated with each grain cart of the array of grain carts.

In Example 17, the subject matter of Example 16 optionally includes wherein one or more fill sensors includes an optical sensor, a weight sensor, or a flow rate sensor to assess the fill level of the array of grain carts.

In Example 18, the subject matter of any one or more of Examples 16-17 optionally include determining respective transit times for the array of grain carts to approach the harvester; generating respective availability indexes for the array of grain carts based on the respective fill levels and the respective transit times of the array of grain carts.

In Example 19, the subject matter of any one or more of Examples 14-18 optionally include wherein conducting the array of grain carts with the cascaded cluster of autonomous directions includes determining a transit time for the second grain cart to approach the harvester.

In Example 20, the subject matter of any one or more of Examples 14-19 optionally include forecasting a fill time for the first grain cart.

In Example 21, the subject matter of any one or more of Examples 14-20 optionally include wherein the second grain cart includes a fill sensor directed at the first grain cart, the fill level sensor of the second grain cart configured to monitor the first grain cart fill level.

In Example 22, the subject matter of Example 21 optionally includes wherein directing the first grain cart to depart from the harvester is based on monitoring the first grain cart fill level with the fill sensor of the second grain cart.

Example 23 is a method of orchestrating the filling of a plurality of grain carts to decrease stoppage of at least one harvester, the method comprising: monitoring a fill characteristic of a first grain cart of the plurality of grain carts, including forecasting a fill time for the first grain cart; assessing availability of a subset of the plurality of grain carts to identify a second grain cart of the plurality grain carts to replace the first grain cart, assessing the availability including one or more of: determining a fill characteristic of the second grain cart; determining a transit time for the second grain cart to approach the at least one harvester; and generating an availability index for each of the subset of the plurality of grain carts based on the fill characteristic of the first grain cart, and one or more of the fill characteristic of the second grain cart or the transit time; and dispatching the second grain cart to the at least one harvester in correspondence with the availability index for the second grain cart exceeding an index threshold.

In Example 24, the subject matter of Example 23 optionally includes dispatching the second grain cart prior to expiration of the fill time for the first grain cart.

In Example 25, the subject matter of any one or more of Examples 23-24 optionally include wherein the index threshold is a collection of availability indexes of the subset of the plurality of grain carts not including the second grain cart.

In Example 26, the subject matter of Example 25 optionally includes wherein the second grain cart has the greatest availability index relative to the availability indexes of the plurality of grain carts not including the second grain cart, prior to dispatching of the second grain cart.

In Example 27, the subject matter of any one or more of Examples 23-26 optionally include wherein assessing the availability of the subset of the plurality of grain carts includes: determining a fill characteristic of a harvester grain bin; and generating the availability index includes generating the availability index based on at least the fill characteristic of the harvester grain bin, the fill characteristic of the second grain cart, and the transit time.

In Example 28, the subject matter of any one or more of Examples 23-27 optionally include wherein assessing the availability includes each of determining the fill characteristic of the second grain cart, determining the transit time for the second grain cart, and generating the availability index.

In Example 29, the subject matter of any one or more of Examples 23-28 optionally include wherein generating the availability index is based on the fill time, and both of the fill characteristic of the second grain cart and the transit time.

In Example 30, the subject matter of any one or more of Examples 23-29 optionally include wherein: the plurality of grain carts includes a third grain cart; assessing availability of the subset of the plurality of grain carts includes: determining a fill characteristic of the third grain cart; determining a transit time for the third grain cart to approach the at least one harvester; generating an availability index for the third grain cart based on the fill time, and one or more of the fill characteristic of the third grain cart and the transit time for the third grain cart to approach the at least one harvester.

In Example 31, the subject matter of any one or more of Examples 17-30 optionally include wherein the availability index for the second grain cart is greater than the availability index for the third grain cart, and the second grain cart is dispatched to replace the first grain cart.

In Example 32, the subject matter of any one or more of Examples 23-31 optionally include wherein: the plurality of grain carts includes a third grain cart; the at least one harvester includes a first harvester and a second harvester; assessing availability of the subset of the plurality of grain carts includes: wherein determining the transit time for the second grain cart to approach the at least one harvester includes: determining the transit time for the second grain cart to approach the first harvester; and determining the transit time for the second grain cart to approach the second harvester; determining the transit time for the third grain cart to approach the first harvester; and determining the transit time for the third grain cart to approach the second harvester; wherein generating the availability index for each of subset of the plurality of grain carts includes: generating a first availability index for the second grain cart based on the transit time for the second grain cart to approach the first harvester; generating a second availability index for the second grain cart based on the transit time for the second grain cart to approach the second harvester; generating a third availability index for the third grain cart based on the transit time for the third grain cart to approach the first harvester; and generating a fourth availability index for the third grain cart based on the transit time for the third grain cart to approach the second harvester.

In Example 33, the subject matter of Example 32 optionally includes wherein: the first availability index is greater than the second availability index based on the transit time for the second grain cart to approach the first harvester is less than the transit time for the second grain cart to approach the second harvester; the second grain cart is dispatched to the first harvester based on the first availability index being greater than the second availability index.

In Example 34, the subject matter of any one or more of Examples 32-33 optionally include wherein: the first availability index is greater than the third availability index based on the transit time for the second grain cart to approach the first harvester is less than the transit time for the third grain cart to approach the first harvester; the second grain cart is dispatched to the first harvester based on the first availability index being greater than the third availability index.

In Example 35, the subject matter of any one or more of Examples 32-34 optionally include wherein: the third availability index is greater than the fourth availability index based on the transit time for the third grain cart to approach the second harvester is less than the transit time for the third grain cart to approach the second harvester; the third grain cart is dispatched to the first harvester based on the third availability index being greater than the fourth availability index.

In Example 36, the subject matter of any one or more of Examples 23-35 optionally include wherein: the plurality of grain carts includes a third grain cart; the at least one harvester includes a first harvester and a second harvester; generating the availability index for each of subset of the plurality of grain carts includes: generating a first availability index for the second grain cart based on the fill characteristic for the second grain cart; and generating a second availability index for the third grain cart based on the fill characteristic for the third grain cart.

Example 37 is a method of filling plurality of grain carts with a grain spout off of a harvester, the method comprising: trailing a first grain cart of the plurality of grain carts with a second grain cart of the plurality of grain carts, wherein the second grain cart is proximate to the first grain cart or the harvester while trailing the first grain cart; conducting a cascaded series of instructions, including: stopping flow of material from the grain spout of the harvester with the first grain cart at an offloading position proximate the harvester; dispatching the first grain cart to depart from the harvester; instructing the second grain cart of the plurality of grain carts to approach the offloading position; and starting flow of material from the grain spout with the second grain cart in the offloading position.

In Example 38, the subject matter of Example 37 optionally includes autonomously moving the first grain cart away from the harvester; and autonomously moving the second grain cart into the offloading position.

In Example 39, the subject matter of any one or more of Examples 37-38 optionally include manually moving the first grain cart away from the harvester; and manually moving the second grain cart into the offloading position.

In Example 40, the subject matter of any one or more of Examples 37-39 optionally include changing a speed of the harvester, including decreasing a speed of the harvester or increasing a speed of the harvester.

In Example 41, the subject matter of any one or more of Examples 37-40 optionally include dispatching of the first grain cart includes providing guidance cues to the first grain cart.

In Example 42, the subject matter of any one or more of Examples 37-41 optionally include wherein dispatching of the first grain cart includes autonomously moving the first grain cart.

In Example 43, the subject matter of any one or more of Examples 37-42 optionally include wherein instructing the second grain cart of the plurality of grain carts to approach the offloading position includes providing guidance cues to the second grain cart.

In Example 44, the subject matter of any one or more of Examples 37-43 optionally include wherein instructing the second grain cart of the plurality of grain carts to approach the offloading position includes autonomously moving the second grain cart.

In Example 43, the subject matter of any one or more of Examples 37-42 optionally include wherein instructing the second grain cart of the plurality of grain carts to approach the offloading position includes providing guidance cues to the second grain cart.

In Example 44, the subject matter of any one or more of Examples 37-43 optionally include wherein instructing the second grain cart of the plurality of grain carts to approach the offloading position includes autonomously moving the second grain cart.

Each of these non-limiting examples can stand on its own, or can be combined in various permutations or combinations with one or more of the other examples.

The above description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Geometric terms, such as "parallel", "perpendicular", "round", or "square", are not intended to require absolute mathematical precision, unless the context indicates otherwise. Instead, such geometric terms allow for variations due to manufacturing or equivalent functions. For example, if an element is described as "round" or "generally round," a component that is not precisely circular (e.g., one that is slightly oblong or is a many-sided polygon) is still encompassed by this description.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A method of filling a plurality of grain carts with a grain spout off of a harvester, the method comprising:
directing a first grain cart to follow the harvester at an offloading position with respect to the harvester;
directing a second grain cart to follow the harvester or the first grain cart, wherein directing the second grain cart includes:
establishing a first waypoint with a position sensor of the first grain cart or the harvester;
establishing a second waypoint with the position sensor of the first grain cart or the harvester;
autonomously moving the second grain cart to the first waypoint; and
autonomously moving the second grain cart from the first waypoint to the second waypoint.

2. The method of claim 1, wherein the position sensor is associated with the first grain cart, and the first grain cart establishes the first waypoint and the second waypoint.

3. The method of claim 1, wherein the position sensor is associated with the harvester, and the harvester establishes the first waypoint and the second waypoint.

4. The method of claim 1, wherein the position sensor includes one or more of a global position sensor or a real-time kinematic sensor.

5. The method of claim 1, wherein establishing the first waypoint or the second waypoint includes incorporating a cart offset into the first waypoint or the second waypoint.

6. The method of claim 5, wherein the cart offset changes a position of the first waypoint or the second waypoint to enable the offloading position with respect to the harvester.

7. The method of claim 1, further comprising:
establishing a first speed associated with the first waypoint; and
autonomously moving the second grain cart to the second waypoint includes the second grain cart travelling at the first speed.

8. A control system for an agricultural operation, the control system comprising:
a position sensor associated with at least one grain cart;
one or more processors, the processors including a grain cart queueing module configured to direct the at least one grain cart to follow a harvester or a preceding grain cart, the one or more processors configured to:
generate one or more waypoints based on an actual position of the harvester or the preceding grain cart;
autonomously direct the at least one grain cart along the one or more waypoints based on the actual position of the harvester or the preceding grain cart; and
move the at least one grain cart along the one or more waypoints according to the autonomous direction.

9. The control system of claim 8, further comprising an autonomous direction module configured to issue a cascaded cluster of autonomous directions to the one or more grain carts and the harvester, the cascaded cluster of autonomous directions including:
stopping flow of material from the grain spout of the harvester with a first grain cart at an offloading position;
instructing a second grain cart to approach the offloading position; and
starting flow of material from grain spout with the second grain cart in the offloading position.

10. The control system of claim 9, wherein the cascaded cluster of autonomous directions includes guiding the first grain cart to depart from the offloading position.

11. The control system of claim 8, further comprising a position sensor associated with a harvester, and the harvester establishes the one or more waypoints.

12. The control system of claim 8, wherein the position sensor includes one or more of a global position sensor or a real-time kinematic sensor.

13. The control system of claim 8, wherein:
the one or more waypoints includes a first waypoint and a second waypoint;
the one or more processors are configured to establish a first speed associated with the first waypoint;
the one or more processors are configured to autonomously move the second grain cart from the first waypoint to the second waypoint at the first speed.

14. A method of filling a plurality of grain carts with a grain spout off of a harvester, the method comprising:
directing a first grain cart of the plurality of grain carts to depart from the harvester;
conducting a subset of the plurality of grain carts with a cascaded cluster of autonomous directions precipitated by direction of the first grain cart:
stopping flow of material from the grain spout of the harvester with the first grain cart at an offloading position proximate the harvester;
instructing a second grain cart of the plurality of grain carts to approach the offloading position; and
starting flow of material from the grain spout with the second grain cart in the offloading position.

15. The method of claim 14, wherein conducting the array of grain carts includes assessing availability of a subset of the plurality of grain carts to identify the second grain cart of the plurality of grain carts to replace the first grain cart.

16. The method of claim 14, wherein conducting the array of grain carts with the cascaded cluster of autonomous directions includes determining respective fill levels of the array of grain carts using one or more fill sensors associated with each grain cart of the array of grain carts.

17. The method of claim 16, wherein one or more fill sensors includes an optical sensor, a weight sensor, or a flow rate sensor to assess the fill level of the array of grain carts.

18. The method of claim 16, further comprising:
determining respective transit times for the array of grain carts to approach the harvester;
generating respective availability indexes for the array of grain carts based on the respective fill levels and the respective transit times of the array of grain carts.

19. The method of claim 14, wherein conducting the array of grain carts with the cascaded cluster of autonomous directions includes determining a transit time for the second grain cart to approach the harvester.

20. The method of claim 14, comprising forecasting a fill time for the first grain cart.

21. The method of claim 14, wherein the second grain cart includes a fill sensor directed at the first grain cart, the fill level sensor of the second grain cart configured to monitor the first grain cart fill level.

22. The method of claim 21, wherein directing the first grain cart to depart from the harvester is based on monitoring the first grain cart fill level with the fill sensor of the second grain cart.
